# EUROPÄISCHE PATENTSCHRIFT

(11) **EP 3 789 447 B1**
(45) Veröffentlichungstag und Bekanntmachung des Hinweises auf die Patenterteilung: **03.09.2025**
(21) Anmeldenummer: 19195499.9
(22) Anmeldetag: 05.09.2019
(51) Int. Cl.: C08K 3/06, C08K 5/39, C08K 5/47

(54) **VERNETZUNGSMITTEL FÜR POLYMERE SYSTEME**
CROSSLINKING AGENTS FOR POLYMERIC SYSTEMS
MILIEU DE RÉTICULATION POUR SYSTÈMES POLYMÈRES

(43) Veröffentlichungstag der Anmeldung: 10.03.2021
(73) Patentinhaber: Henkel AG & Co. KGaA, 40589 Düsseldorf (DE)
(72) Erfinder: Klotz, Michael, 68353 Edingen-Neckarhausen (DE); Sauer, Ralf, 68789 St. Leon-Rot (DE); Cappel, Fiona, 69207 Sandhausen (DE)

(56) Entgegenhaltungen:
- WO-A1-2006/076958
- WO-A1-2009/000735
- WO-A1-2011/020714
- WO-A2-02/48255

## Beschreibung

Die vorliegende Erfindung betrifft ein Vernetzungsmittel für polymere Systeme, das elementaren Schwefel, Phenolharz, Thiazoldisulfid-Verbindungen und Metallsalze auf Basis von Thiocarbamaten aufweist sowie dessen Verwendung in der Fahrzeugherstellung.

Die Herstellung eines Automobils erfordert einen großen Aufwand an technischen Ressourcen und Mitarbeitern. Meist werden die Fahrzeuge in Linienfertigung hergestellt, bei der das unfertige Fahrzeug zahlreiche Stationen durchläuft, an denen jeweils einige wenige Arbeitsschritte durchgeführt werden, die das Auto weiter komplettieren. So wird die Karosserie beispielsweise aus Blechen mittels Punktschweißverfahren oder Klebetechnik zuerst zur Rohkarosserie zusammengefügt, die in einem anschließenden Schritt lackiert wird, wobei auch das Lackieren mehrere Schritte umfasst. Um zu der fertig lackierten Karosserie zu gelangen, werden meist ein oder mehrere Tauchbäder durchlaufen, in denen die Karosserie zunächst gegen Korrosion geschützt wird. Dann wird ein Füller aufgetragen, der den gleichmäßigen Auftrag der Decklacke ermöglicht, der dem Fahrzeug die gewünschte Farbe verleiht und der abschließend mit einem Klarlack versiegelt wird. In der Fahrzeugmontage wird die lackierte Karosserie um alle noch fehlenden Bauteile ergänzt. Die wegen ihrer Effizienz geschätzte Linienfertigung bringt die Herausforderung mit sich, dass die in den einzelnen Schritten eingesetzten chemischen Komponenten mit den Komponenten der anderen Schritte kompatibel sein müssen. So darf beispielsweise der Klebstoff, der bei der Herstellung der Rohkarosserie verwendet wird, nicht mit den bei der Lackierung verwendeten Lacken reagieren, wobei wiederum die Klebstoffe, die zur Befestigung von Verkleidungen verwendet werden, nicht mit den Lacken reagieren dürfen, aber gleichzeitig auf diesen haften sollen.

Aufgrund der Abstimmung der einzelnen Komponenten aufeinander erfordert jede Veränderung des Prozessablaufs eine Überprüfung und gegebenenfalls erneute Abstimmung der einzelnen Komponenten. So hat beispielsweise nach einer Verbesserung der Tauchlackierungssysteme, bei denen die herkömmlichen Zinnkatalysatoren durch Bismuthkatalysatoren ersetzt wurden, um die Aushärtungstemperatur der Lacke zu reduzieren, dazu geführt, dass schwefelhärtende Klebstoffe, die auf die Lacke aufgebracht wurden, nicht mehr die gewohnte Leistung und Qualität zeigten, da die Bismuthkatalysatoren mit dem Schwefel reagierten, was entweder zu nicht ausgehärteten Lacken an den Stellen, an denen der Klebstoff aufgebracht wurden, wodurch diese Stellen sehr korrosionsanfällig wurde, oder zur Bildung von Bismuthsulfid führte, wodurch sich Defekte und Störstellen in den Deck- und Klarlacken bildeten.

WO 2006/076958 A1, WO 2011/020714 A1 und WO 02/48255 A2 offenbaren Kautschukdämpfungsmassen, die als Vulkanisationsmittel ein schwefelbasiertes System mit Beschleunigern enthalten können.

Da auf die mit der Verwendung von Katalysatoren auf Basis von Bismuth verbundenen Vorteile seitens der Industrie nicht verzichtet werden möchte, besteht der Bedarf nach Systemen, insbesondere nach adhäsiven Systemen, die mit den verbesserten Katalysatoren und veränderten Prozessabläufen kompatibel sind.

Es ist daher die Aufgabe der vorliegenden Erfindung ein System, insbesondere ein Klebstoffsystem, zur Verfügung zu stellen, das eine hohe Toleranz gegenüber Bismuth aufweist, mit Bismuthkatalysatoren kompatibel ist und darüber hinaus in die etablierten Prozesse der Fahrzeugfertigung eingefügt werden kann.

Es wurde überraschend gefunden, dass diese Aufgabe durch ein Vernetzungsmittel gelöst wird, das neben elementarem Schwefel und Phenolharz, Thiazoldisulfid-Verbindungen und Metallsalze auf Basis von Thiocarbamaten aufweist.

Daher ist ein erster Gegenstand der vorliegenden Erfindung ein Vernetzungsmittel für polymere Systeme umfassend
a) elementaren Schwefel;
b) ein oder mehrere Phenolharze;
c) ein oder mehrere Thiazoldisulfid-Verbindungen; und
d) ein oder mehrere Metallsalze auf Basis von Thiocarbarmaten.

Das erfindungsgemäße Vernetzungsmittel zeigte eine gute Kompatibilität mit den in der Tauchlackierung von Fahrzeugkarosserien verwendeten Bismuthkatalysatoren und konnte ohne Einschränkung der Leistung auf entsprechend beschichtete Substrate aufgebracht werden.

Schwefelhaltige Vernetzungssysteme zeigen häufig den Nachteil, dass sie eine hohe Emissionsrate an Schwefel aufweisen, was neben der gesundheitlichen Belastung während der Verwendung dazu führt, dass Produkte, die mittels schwefelhaltiger Vernetzungssysteme hergestellt werden, beispielsweise Kautschukprodukte, einen unangenehmen Geruch aufweisen, der sie für Anwendungen in geschlossen Räumen, wie dem Fahrzeuginneren, unbrauchbar macht. Im Gegensatz zu herkömmlichen Systemen zeigte das erfindungsgemäße Vernetzungsmittel geringe bis keine Emission an Schwefel, wodurch nicht nur das gesundheitliche Risiko gesenkt wird, sondern auch die Einsatzgebiete des erfindungsgemäßen Vernetzungsmittels erweitert werden.

Das erfindungsgemäße Vernetzungsmittel kann beispielsweise für die Aushärtung von polymeren Systemen verwendet werden. Der Grad der Vernetzung des Polymers kann dabei neben der Dauer der Polymerisation durch die Menge an aktiver Komponente gesteuert werden. Je nach Anwendung kann ein hoher oder niedriger Grad an Vernetzung gewünscht sein. Der Gehalt an Schwefel als aktiver Komponente sollte jedoch nicht zu hoch gewählt sein, um eine Schwefelemission zu vermeiden. Es wurde überraschend gefunden, dass auch bei einem vergleichsweise hohen Gehalt an Schwefel im erfindungsgemäßen Vernetzungsmittel die bei anderen Systemen beobachtete Schwefelemission weitgehend vermieden werden konnte. Im Rahmen der vorliegenden Erfindung hat es sich diesbezüglich als vorteilhaft erwiesen, wenn die Menge an Schwefel in dem Vernetzungsmittel nicht mehr als 5 Gew.-% beträgt. Daher ist eine Ausführungsform bevorzugt, in der das erfindungsgemäße Vernetzungsmittel 1 bis 5 Gew.-%, vorzugsweise 1,5 bis 4 Gew.-% an elementarem Schwefel aufweist, jeweils bezogen auf das Gesamtgewicht des Vernetzungsmittels.

Das erfindungsgemäße Vernetzungsmittel weist weiterhin wenigstens ein Phenolharz auf, womit insbesondere die Konsistenz des Vernetzungsmittels für die jeweilige Anwendung angepasst werden kann. Vorzugsweise beträgt der Gehalt an Phenolharz in dem Vernetzungsmittel 0,5 bis 4 Gew.-%, besonders bevorzugt 0,7 bis 3 Gew.-%, jeweils bezogen auf das Gesamtgewicht des Vernetzungsmittels. Das im dem erfindungsgemäßen Vernetzungsmittel verwendete Phenolharz ist vorzugsweise eines, das durch Kondensation einer Mischung umfassend Formaldehyd und Phenol gewonnen wird. Besonders bevorzugt weist die Mischung einen Überschuss an Phenol auf. Insbesondere liegt das molare Verhältnis von Formaldehyd zu Phenol in der Mischung bei weniger als 1:1.

Das erfindungsgemäße Vernetzungsmittel weist ein oder mehrere Thiazoldisufid-Verbindungen auf. Es wurde überraschend gefunden, dass die Zugabe dieser Verbindungen insbesondere die Toleranz gegenüber Bismuth-Verbindungen, wie beispielsweise bismuthbasierten Katalysatorsystemen, fördert. Vorzugsweise liegt der Anteil der einen oder mehrerer Thiazoldisulfid-Verbindungen im erfindungsgemäßen Vernetzungsmittel bei 0,3 bis 7 Gew.-%, vorzugsweise bei 0,5 bis 5 Gew.-%, jeweils bezogen auf das Gesamtgewicht des Vernetzungsmittels. Die ein oder mehrere Thiazodisulfid-Verbindungen sind vorzugsweise ausgewählt aus Benzothiazoldisulfid (MBTS) und/oder Zink-Benzothiazoldisulfid (ZMBT).

Die in dem erfindungsgemäßen Vernetzungsmittel enthaltenen ein oder mehrere Metallsalze auf Basis von Thiocarbamaten machen vorzugsweise 0,2 bis 2 Gew.-%, vorzugsweise 0,4 bis 1,5 Gew.-% des erfindungsgemäßen Vernetzungsmittels aus, jeweils bezogen auf das Gesamtgewicht des Vernetzungsmittels. Als besonders vorteilhaft hat es sich erwiesen, wenn wenigstens eines der ein oder mehreren Metallsalze auf Basis von Thiocarbamaten mindestens ein Zinksalz umfasst. Daher ist eine Ausführungsform bevorzugt, in der mindestens eines der ein oder mehreren Metallsalze auf Basis von Thiocarbamaten mindestens ein Zinksalt, insbesondere Zink-Dibenzoylthiocarbamat, umfasst.

Das erfindungsgemäße Vernetzungsmittel kann außerdem zusätzliche Komponenten aufweisen, wie Füllstoffe und Additive, die insbesondere dazu dienen, die Eigenschaften des Vernetzungsmittels an die jeweiligen Anforderungen anzupassen. In einer bevorzugten Ausführungsform weist das erfindungsgemäße Vernetzungsmittel weiterhin Füllstoffe auf, vorzugsweise solche, die aus der Gruppe ausgewählt sind, die aus Ruß, Calciumcarbonat, beschichtetem Calciumcarbonat und Calciumoxid besteht. Die Menge an Füllstoff beträgt dabei vorzugsweise 40 bis 70 Gew.-%, besonders bevorzugt 45 bis 65 Gew.-%, jeweils bezogen auf das Gesamtgewicht des Vernetzungsmittels.

In einer besonders bevorzugten Ausführungsform weist das erfindungsgemäße Vernetzungsmittel folgendes auf:
a) elementaren Schwefel in einer Menge von 1 bis 5 Gew.-%, vorzugsweise 1,5 bis 4 Gew.-%
b) ein oder mehrere Phenolharze in einer Menge von 0,5 bis 4 Gew.-%, vorzugsweise 0,7 bis 3 Gew.-%;
c) ein oder mehrere Thiazoldisulfid-Verbindungen in einer Menge von 0,3 bis 7 Gew.-%, vorzugsweise 0,5 bis 5 Gew.-%; und
d) ein oder mehrere Metallsalze auf Basis von Thiocarbamaten in einer Menge von 0,2 bis 2 Gew.-%, vorzugsweise 0,4 bis 1,5 Gew.-%
   wobei sich die Mengenangaben jeweils auf das Gesamtgewicht des Vernetzungsmittels beziehen.

Das erfindungsgemäße Vernetzungsmittel kann weiterhin eine polymere Komponente aufweisen, vorzugsweise in einer Menge von 15 bis 35 Gew.-%, vorzugsweise 20 bis 30 Gew.-%, jeweils bezogen auf Gesamtgewicht des Vernetzungsmittels. Vorzugsweise handelt es sich bei der polymeren Komponente um ein Polymer aus der Gruppe der Polybutadiene, insbesondere um eine Mischung aus einem Polybutadien und einem Polybutadien-Maleinsäureanhydrid-Adukt. Besonders bevorzugt enthält das Vernetzungsmittel eine flüssige polymere Komponente, insbesondere ein flüssiges Polybutadien, vorzugsweise mit einem gewichtsmittleren Molekulargewicht Mw von 500 bis 10000 g/mol, insbesondere 1000 bis 5000 g/mol (gemessen mittels GPC gegenüber einem Polystyrol-Standard).

Auch wenn das erfindungsgemäße Vernetzungsmittel in allen möglichen technischen Gebieten Anwendung finden kann, ist es besonders für die Verwendung im Fahrzeugbau geeignet. Daher ist ein weiterer Gegenstand der vorliegenden Anmeldung die Verwendung des erfindungsgemäßen Vernetzungsmittels in der Fahrzeugherstellung.

Dabei hat sich das erfindungsgemäße Vernetzungsmittel als besonders vorteilhaft als Klebstoff bei der Herstellung von Karosserien und Innenausstattungen von Fahrzeugen erwiesen und zeigte eine gute Kompatibilität mit den in der Fahrzeugfertigung eingesetzten elektrophoretischen Tauchvorgängen, die beispielsweise bei der Lackierung von Karosserie und Karosserieteilen eingesetzt werden. In einer bevorzugten Ausführungsform wird das erfindungsgemäße Vernetzungsmittel daher in elektrophoretischen Beschichtungsprozessen und/oder im Zusammenhang mit "Liquid Applied Sound Deadener" (LASD) verwendet. Bei den sogenannten "Liquid Applied Sound Deadener" handelt es um flüssig aufgebrachte Schaumdämmung, die ein deutliche Reduzierung von Vibrationen und Geräuschen im Fahrzeug erreicht werden kann und die zur Befestigung weiteren Dämmmaterials verwendet werden können. In einer weiterhin bevorzugten Ausführungsform wird das erfindungsgemäße Vernetzungsmittel in Gegenwart von Bismuth-Katalysatoren verwendet.

Die vorliegende Erfindung wird anhand der nachfolgenden Beispiele näher erläutert, wobei diese keinesfalls als Einschränkung des Erfindungsgedankens zu verstehen sind.

### Beispiele:

Es wurden die in der Tabelle 1 zusammengefassten Zusammensetzungen hergestellt, wobei die Mengenangaben jeweils in Gewichtsprozent bezogen auf das Gesamtgewicht der Zusammensetzung zu verstehen sind.

**Tabelle 1:**

| Komponente | Bsp. 1 | Bsp. 2 | Bsp.3 |
|---|---|---|---|
| Polymer | 24 | 24 | 24 |
| Füllstoff | 64,74 | 63,74 | 62,74 |
| Phenolharz | 0,9 | 1,9 | 2,9 |
| Schwefel | 2,5 | 2,5 | 2,5 |
| Zink-Dibenzoylthiocarbamat | 1,5 | 1,5 | 1,5 |
| Benzothiazol-Disulfid | 5,0 | - | 5,0 |
| Zink-Benzothiazol-Disulfid | - | 5,0 | - |
| Additive | 1,36 | 1,36 | 1,36 |
| Gesamt | 100,00 | 100,00 | 100,00 |

Die Zusammensetzungen der Tabelle 1 wurden auf ihre Verträglichkeit mit üblichen elektrophoretischen Beschichtungssystemen untersucht, wobei als beispielhafte Beschichtung der Bismuth-haltige Lack CathoGuard 800 der BASF SE, Deutschland verwendet wurde. Die Zusammensetzung wurde in Form eines Tropfens auf ein Probenblech aufgebracht und mit dem Lack beschichtet. Der Lack wurde unter den in Tabelle 2 angegebenen Bedingungen ausgehärtet und beurteilt.

**Tabelle 2:**

| Bedingung | 10 min;165 °C | 15 min;165 °C | 20 min;165 °C | 5 min;170 °C | 10 min;170 °C |
|---|---|---|---|---|---|
| Ergebnis | 0 | 0 | 0 | 0 | 0 |

**Legende:**

| Note | Bewertung |
|---|---|
| 0 | Keine Veränderung der Oberfläche |
| 1 | Erste Anzeichen für eine Veränderung |
| 3 | Blasenbildung der Lackschicht; keine Ablösung |
| 5 | Ablösung der Lackschicht von der Oberfläche |

Wie sich aus den zur Verfügung gestellten Daten entnehmen lässt, weisen die erfindungsgemäßen Zusammensetzungen eine hervorragende Kompatibilität mit gängigen Lackierungssystemen auf.

Ebenfalls durchgeführte Schwefelemissionstest zeigten die geringe Emissionsneigung der erfindungsgemäßen Zusammensetzungen. Dazu wurden die Zusammensetzungen auf ein Blech in einer 2 mm dicken Schicht aufgerakelt. Das Blech wurde zum Aushärten in eine 1l fassende Metalldose gelegt und mit einem nass-KTL-Blech verschlossen. Die Versuchsanordnung wurde in einem Laborofen bei 105 °C für 6 Minuten und 190 °C für 30 Minuten ausgehärtet, wobei die ausgehenden Emissionen mit der KTL-Beschichtung reagieren. Die Konzentration an Schwefel an der kontaminierten KTL-Oberfläche wurde anschließend über XPS analysiert. Dabei zeigten die Messungen eine Konzentration an Schwefel-Atomen im Bereich von 0,5 Atom-%.

## Patentansprüche

1. Vernetzungsmittel für polymere Systeme umfassend
a) elementaren Schwefel;
b) ein oder mehrere Phenolharze;
c) ein oder mehrere Thiazoldisulfid-Verbindungen; und
d) ein oder mehrere Metallsalze auf Basis von Thiocarbarmaten.

2. Vernetzungsmittel gemäß Anspruch 1, **dadurch gekennzeichnet, dass** die Menge an elementarem Schwefel 1 bis 5 Gew.-%, vorzugsweise 1,5 bis 4 Gew.-% beträgt, jeweils bezogen auf das Gesamtgewicht des Vernetzungsmittels.

3. Vernetzungsmittel gemäß wenigstens einem der Ansprüche 1 oder 2, **dadurch gekennzeichnet, dass** die Menge an Phenolharz in dem Vernetzungsmittel 0,5 bis 4 Gew.-%, vorzugsweise 0,7 bis 3 Gew.-% beträgt, jeweils bezogen auf das Gesamtgewicht des Vernetzungsmittels.

4. Vernetzungsmittel gemäß einem oder mehrerer der vorangehenden Ansprüche, **dadurch gekennzeichnet, dass** das Phenolharz durch Kondensation einer Mischung umfassend Formaldehyd und Phenol gewonnen wird, wobei die Mischung einen Überschuss an Phenol aufweist und wobei das molare Verhältnis von Formaldehyd zu Phenol in der Mischung vorzugsweise kleiner als 1:1 ist.

5. Vernetzungsmittel gemäß wenigstens einem der vorangehenden Ansprüche, **dadurch gekennzeichnet, dass** die Menge an ein oder mehrerer Thiazoldisulfid-Verbindungen 0,3 bis 7 Gew.-%, vorzugsweise 0,5 bis 5 Gew.-% beträgt, jeweils bezogen auf das Gesamtgewicht des Vernetzungsmittels.

6. Vernetzungsmittel gemäß wenigstens einem der vorangehenden Ansprüche, **dadurch gekennzeichnet, dass** die ein oder mehrere Thiazoldissulfid-Verbindungen ausgewählt ist aus Benzothiazoldisulfid (MBTS) und/oder Zink-Benzothiazoldisulfide (ZMBT).

7. Vernetzungsmittel gemäß wenigstens einem der vorangehenden Ansprüche, **dadurch gekennzeichnet, dass** die ein oder mehrere Metallsalze auf Basis von Thiocarbamaten mindestens Zink-Dibenzoyldithiocarbamat umfassen.

8. Vernetzungsmittel gemäß wenigstens einem der vorangehenden Ansprüche, **dadurch gekennzeichnet, dass** die Menge der ein oder mehrerer Metallsalze auf Basis von Thiocarbamaten 0,2 bis 2 Gew.-%, vorzugsweise 0,4 bis 1,5 Gew.-% beträgt, jeweils bezogen auf das Gesamtgewicht des Vernetzungsmittels.

9. Vernetzungsmittel gemäß wenigstens einem der vorangehenden Ansprüche, **dadurch gekennzeichnet, dass** das Vernetzungsmittel weiterhin Füllstoffe aufweist, wobei die Füllstoffe vorzugsweise ausgewählt sind aus der Gruppe bestehend aus Ruß, Calciumcarbonat und Calciumoxid.

10. Vernetzungsmittel gemäß wenigstens einem der vorangehenden Ansprüche, **dadurch gekennzeichnet, dass** das Vernetzungsmittel folgendes umfasst:
a) elementaren Schwefel in einer Menge von 1 bis 5 Gew.-%, vorzugsweise 1,5 bis 4 Gew.-%
b) ein oder mehrere Phenolharze in einer Menge von 0,5 bis 4 Gew.-%, vorzugsweise 0,7 bis 3 Gew.-%;
c) ein oder mehrere Thiazoldisulfid-Verbindungen in einer Menge von 0,3 bis 7 Gew.-%, vorzugsweise 0,5 bis 5 Gew.-%; und
d) ein oder mehrere Metallsalze auf Basis von Thiocarbamaten in einer Menge von 0,2 bis 2 Gew.-%, vorzugsweise 0,4 bis 1,5 Gew.-%
wobei sich die Mengenangaben jeweils auf das Gesamtgewicht des Vernetzungsmittels beziehen.

11. Vernetzungsmittel gemäß wenigstens einem der vorangehenden Ansprüche, **dadurch gekennzeichnet, dass** das Vernetzungsmittel weiterhin eine polymere Komponente aufweist, vorzugsweise in einer Menge von 20 bis 50 Gew.-%, vorzugsweise 25 bis 40 Gew.-%, jeweils bezogen auf das Gesamtgewicht des Vernetzungsmittels.

12. Vernetzungsmittel gemäß Anspruch 11, **dadurch gekennzeichnet, dass** die polymere Komponente ausgewählt ist aus der Gruppe der Polybutadiene.

13. Verwendung eines Vernetzungsmittels gemäß wenigstens einem der Ansprüche 1 bis 12 in der Fahrzeugherstellung.

14. Verwendung gemäß Anspruch 13, **dadurch gekennzeichnet, dass** das Vernetzungsmittel in elektrophoretischen Beschichtungsprozessen, insbesondere in elektrophoretischen Tauchlackierungen und /oder im Zusammenhang mit "Liquid Applied Sound Deadener" verwendet wird.

15. Verwendung gemäß einem oder beiden der Ansprüche 13 und 14, **dadurch gekennzeichnet, dass** das Vernetzungsmittel in Gegenwart von Bismut-Katalysatoren verwendet wird.

## Claims

1. A crosslinking agent for polymeric systems, comprising
a) elemental sulfur ;
b) one or more phenolic resins ;
c) one or more thiazole disulfide compounds ; and
d) one or more metal salts based on thiocarbamates.

2. The crosslinking agent according to claim 1, **characterized in that** the amount of elemental sulfur is 1 to 5 wt.%, preferably 1.5 to 4 wt.%, in each case based on the total weight of the crosslinking agent.

3. The crosslinking agent according to at least one of claims 1 or 2,
**characterized in that** the amount of phenolic resin in the crosslinking agent is 0.5 to 4 wt.%, preferably 0.7 to 3 wt.%, in each case based on the total weight of the crosslinking agent.

4. The crosslinking agent according to one or more of the preceding claims,
**characterized in that** the phenolic resin is obtained by condensation of a mixture comprising formaldehyde and phenol, the mixture having an excess of phenol, and the molar ratio of formaldehyde to phenol in the mixture being preferably less than 1:1.

5. The crosslinking agent according to at least one of the preceding claims,
**characterized in that** the amount of one or more thiazole disulfide compounds is 0.3 to 7 wt.%, preferably 0.5 to 5 wt.%, in each case based on the total weight of the crosslinking agent.

6. The crosslinking agent according to at least one of the preceding claims,
**characterized in that** the one or more thiazole disulfide compounds is selected from benzothiazole disulfide (MBTS) and/or zinc benzothiazole disulfide (ZMBT).

7. The crosslinking agent according to at least one of the preceding claims,
**characterized in that** the one or more metal salts based on thiocarbamates comprise at least zinc dibenzoyldithiocarbamate.

8. The crosslinking agent according to at least one of the preceding claims,
**characterized in that** the amount of the one or more metal salts based on thiocarbamates is 0.2 to 2 wt.%, preferably 0.4 to 1.5 wt.%, in each case based on the total weight of the crosslinking agent.

9. The crosslinking agent according to at least one of the preceding claims,
**characterized in that** the crosslinking agent further comprises fillers, the fillers preferably being selected from the group consisting of carbon black, calcium carbonate and calcium oxide.

10. The crosslinking agent according to at least one of the preceding claims,
**characterized in that** the crosslinking agent comprises the following:
a) elemental sulfur in an amount of 1 to 5 wt.%, preferably 1.5 to 4 wt.%;
b) one or more phenolic resins in an amount of 0.5 to 4 wt.%, preferably 0.7 to 3 wt.%;
c) one or more thiazole disulfide compounds in an amount of 0.3 to 7 wt.%, preferably 0.5 to 5 wt.%; and
d) one or more metal salts based on thiocarbamates in an amount of 0.2 to 2 wt. %, preferably 0.4 to 1.5 wt.%,
the stated amounts each relating to the total weight of the crosslinking agent.

11. The crosslinking agent according to at least one of the preceding claims,
**characterized in that** the crosslinking agent further comprises a polymeric component, preferably in an amount of 20 to 50 wt.%, preferably 25 to 40 wt.%, in each case based on the total weight of the crosslinking agent.

12. The crosslinking agent according to claim 11, **characterized in that** the polymeric component is selected from the group of polybutadienes.

13. A use of a crosslinking agent according to at least one of claims 1 to 12 in vehicle manufacture.

14. The use according to claim 13, **characterized in that** the crosslinking agent is used in electrophoretic coating processes, in particular in electrophoretic dip coating and/or in connection with "liquid applied sound deadener."

15. The use according to one or both of claims 13 and 14,
**characterized in that** the crosslinking agent is used in the presence of bismuth catalysts.

## Revendications

1. Agent de réticulation pour systèmes polymères comprenant
a) du soufre élémentaire ;
b) une ou plusieurs résines phénoliques ;
c) un ou plusieurs composés de disulfure de thiazole ; et
d) un ou plusieurs sels métalliques à base de thiocarbamates.

2. Agent de réticulation selon la revendication 1, **caractérisé en ce que** la quantité de soufre élémentaire va de 1 à 5 % en poids, de préférence de 1,5 à 4 % en poids, respectivement par rapport au poids total de l'agent de réticulation.

3. Agent de réticulation selon au moins l'une des revendications 1 ou 2,
**caractérisé en ce que** la quantité de résine phénolique dans l'agent de réticulation va de 0,5 à 4 % en poids, de préférence de 0,7 à 3 % en poids, respectivement par rapport au poids total de l'agent de réticulation.

4. Agent de réticulation selon l'une ou plusieurs des revendications précédentes, **caractérisé en ce que** la résine phénolique est obtenue par condensation d'un mélange comprenant du formaldéhyde et du phénol, dans lequel le mélange présente un excès de phénol et dans lequel le rapport molaire du formaldéhyde au phénol dans le mélange est de préférence inférieur à 1:1.

5. Agent de réticulation selon au moins l'une des revendications précédentes, **caractérisé en ce que** la quantité d'un ou de plusieurs composés de disulfure de thiazole va de 0,3 à 7 % en poids, de préférence de 0,5 à 5 % en poids, respectivement par rapport au poids total de l'agent de réticulation.

6. Agent de réticulation selon au moins l'une des revendications précédentes, **caractérisé en ce que** le ou les composés de disulfure de thiazole sont choisis parmi le disulfure de benzothiazole (MBTS) et/ou les disulfures de benzothiazole de zinc (ZMBT).

7. Agent de réticulation selon au moins l'une des revendications précédentes, **caractérisé en ce que** le ou les sels métalliques à base de thiocarbamates comprennent au moins du dibenzoyldithiocarbamate de zinc.

8. Agent de réticulation selon au moins l'une des revendications précédentes, **caractérisé en ce que** la quantité du ou des sels métalliques à base de thiocarbamates va de 0,2 à 2 % en poids, de préférence de 0,4 à 1,5 % en poids, respectivement par rapport au poids total de l'agent de réticulation.

9. Agent de réticulation selon au moins l'une des revendications précédentes, **caractérisé en ce que** l'agent de réticulation présente en outre des matières de charge, dans lequel les matières de charge sont de préférence choisies dans le groupe constitué de noir de carbone, carbonate de calcium et oxyde de calcium.

10. Agent de réticulation selon au moins l'une des revendications précédentes, **caractérisé en ce que** l'agent de réticulation comprend les éléments suivants :
a) soufre élémentaire en une quantité allant de 1 à 5 % en poids, de préférence de 1,5 à 4 % en poids ;
b) une ou plusieurs résines phénoliques en une quantité allant de 0,5 à 4 % en poids, de préférence de 0,7 à 3 % en poids ;
c) un ou plusieurs composés de disulfure de thiazole en une quantité allant de 0,3 à 7 % en poids, de préférence de 0,5 à 5 % en poids ; et
d) un ou plusieurs sels métalliques à base de thiocarbamates en une quantité allant de 0,2 à 2 % en poids, de préférence de 0,4 à 1,5 % en poids ;
dans lequel les quantités indiquées se rapportent respectivement au poids total de l'agent de réticulation.

11. Agent de réticulation selon au moins l'une des revendications précédentes, **caractérisé en ce que** l'agent de réticulation présente en outre un composant polymère, de préférence en une quantité allant de 20 à 50 % en poids, de préférence de 25 à 40 % en poids, respectivement par rapport au poids total de l'agent de réticulation.

12. Agent de réticulation selon la revendication 11, **caractérisé en ce que** le composant polymère est choisi dans le groupe constitué de polybutadiènes.

13. Utilisation d'un agent de réticulation selon au moins l'une des revendications 1 à 12 dans la fabrication de véhicules.

14. Utilisation selon la revendication 13, **caractérisée en ce que** l'agent de réticulation est utilisé dans des processus de revêtement électrophorétique, en particulier dans des peintures par immersion électrophorétique et/ou en relation avec des insonorisants appliqués liquides.

15. Utilisation selon l'une des revendications 13 et 14 ou les deux,
**caractérisée en ce que** l'agent de réticulation est utilisé en présence de catalyseurs à base de bismuth.
